# EUROPÄISCHE PATENTSCHRIFT

(11) **EP 3 200 154 B1**
(45) Veröffentlichungstag und Bekanntmachung des Hinweises auf die Patenterteilung: **11.11.2020**
(21) Anmeldenummer: 17000040.0
(22) Anmeldetag: 10.01.2017
(51) Int. Cl.: F41G 7/34, F41G 7/30, G06T 7/70, F41G 7/22, F41G 3/02

(54) **VERFAHREN ZUM BESTIMMEN EINER POSITION EINES OBJEKTS**
METHOD FOR DETERMINING A POSITION OF AN OBJECT
PROCÉDÉ DE DÉTERMINATION D'UNE POSITION D'UN OBJET

(30) Priorität: 26.01.2016 DE 102016000810
(43) Veröffentlichungstag der Anmeldung: 02.08.2017
(73) Patentinhaber: Diehl Defence GmbH & Co. KG, 88662 ÜBERLINGEN (DE)
(72) Erfinder: Gagel, Florian, DE - 88690 Uhldingen-Mühlhofen (DE); Arndt, Martin, DE - 88696 Owingen (DE); Imkenberg, Frank, DE - 88696 Owingen (DE)
(74) Vertreter: Diehl Patentabteilung

(56) Entgegenhaltungen:
- DE-A1-102010 018 143
- US-B1- 8 525 088

## Beschreibung

Die Erfindung betrifft ein Verfahren zum Bestimmen einer Position eines Objekts.

Zum Bestimmen einer Position eines Objekts, beispielsweise in einer Landschaft, kann das Objekt aufgenommen werden und die Position des Objekts im Bild bestimmt werden. Sind im Bild auch Gegenstände enthalten, deren Position in der Landschaft bekannt ist, kann aus der Relativposition des Objekts zu diesen Gegenständen im Bild auf die Position des Objekts, beispielsweise in der Landschaft, geschlossen werden.

Aus der DE 10 2010 018 143 A1 ist ein Verfahren zur Bestimmung von Positionsdaten eines Zielobjekts in einem Referenzsystem bekannt. Dabei wird ein sich einem Beobachter ergebendes Bild des Zielobjekts abgeglichen mit einem dreidimensionalen Referenzmodell der Umgebung des Zielobjekts. Anhand bekannter Ortsdaten des Referenzmodells werden die Positionsdaten des anvisierten Zielobjekts bestimmt.

Die US 8 525 088B1 beschreibt ein Verfahren zur Führung eines Flugkörpers zu einem Ziel, bei dem von einem Flugkörper aufgenommene Bilder, der sich auf einem Anflug auf das Ziel befindet, mit Bildern korreliert werden, die zuvor von einem System einer Plattform aufgenommen wurden. Diese von dem System in unterschiedlicher Auflösung aufgenommenen Bilder können untereinander korreliert werden, um festzustellen, ob diese für eine spätere Korrelation mit den vom Flugkörper aufgenommenen Bildern geeignet sind.

Es ist eine Aufgabe der vorliegenden Erfindung, ein verbessertes Verfahren zum Bestimmen einer Position eines Objekts anzugeben.

Diese Aufgabe wird durch ein Verfahren zum Bestimmen einer Position eines Objekts gemäß den Merkmalen von Patentanspruch 1 gelöst, bei dem ein erstes Referenzbild des Objekts mit einer ersten Zoomstufe einer zoomfähigen Kamera aufgenommen wird, eine Position des Objekts im Referenzbild bestimmt wird, Schlüsselpunkte mit charakteristischen Bildmerkmalen im Referenzbild ermittelt werden, im Referenzbild die Relativpositionen der Schlüsselpunkte zum Objekt bestimmt werden, ein das erste Referenzbild überlappendes zweites Referenzbild mit einer niedrigeren zweiten Zoomstufe aufgenommen wird, Schlüsselpunkte mit charakteristischen Bildmerkmalen im zweiten Referenzbild ermittelt werden, die Schlüsselpunkte in den Referenzbildern einander zugeordnet werden und die Position des Objekts im zweiten Referenzbild anhand der Relativpositionen der Schlüsselpunkte des zweiten Referenzbilds zum Objekt bestimmt wird.

Die Erfindung geht von der Überlegung aus, dass ein sehr kleines Objekt oder ein von der Kamera sehr weit entferntes Objekt nur schwer oder nicht im Bild zu erkennen ist. Eine Möglichkeit zum Abbilden des Objekts besteht darin, mit dem Bild an das Objekt heranzuzoomen, bis dieses im Bild ausreichend erkennbar ist. Das Objekt kann nun zwar aufgenommen werden, die Umgebung im Bild enthält jedoch mit hoher Wahrscheinlichkeit nicht genügend signifikante Bildpunkte, um es mit einer bekannten Landschaft korrelieren zu können und somit das Objekt in seiner Position in der Landschaft einordnen zu können. Es besteht somit das Problem, dass ein sehr kleines oder ein sehr weit entferntes Objekt in einem korrelierbaren Bild eventuell nicht zu erkennen ist und ein gezoomtes Bild, in dem das Objekt zu erkennen ist, gegebenenfalls nicht korrelierbar ist.

Durch die Erfindung wird das Objekt im ersten Referenzbild mit der ersten Zoomstufe aufgenommen. Das Objekt ist im Bild erkennbar und die Position des Objekts kann im Referenzbild bestimmt werden. Dies kann beispielsweise geschehen, indem das Objekt im Referenzbild markiert wird. Nun können die Relativpositionen des Objekts zu den Schlüsselpunkten mit den charakteristischen Bildmerkmalen des ersten Referenzbilds bestimmt werden. Durch die Aufnahme des zweiten Referenzbilds mit einer niedrigeren zweiten Zoomstufe wird die Landschaft um das Objekt mit einem größeren Blickwinkel aufgenommen. Durch die niedrigere Zoomstufe ist das Objekt zwar kleiner im zweiten Referenzbild aufgenommen, gegebenenfalls sogar nicht mehr als solches erkennbar. Die Schlüsselpunkte des ersten Referenzbilds können jedoch Schlüsselpunkten des zweiten Referenzbilds zugeordnet werden, sodass die Position des Objekts durch die bekannte Relativlage des Objekts zu den Schlüsselpunkten auch im zweiten Bild bestimmt werden kann. Die Aufnahmereihenfolge der Referenzbilder ist frei wählbar, wobei es jedoch vorteilhaft ist, zunächst das Referenzbild mit höherer Zoomstufe und dann das Referenzbild mit niedrigerer Zoomstufe aufzunehmen.

Zum Bestimmen der Position des Objekts im zweiten Referenzbild oder in der Landschaft wird also das erste Referenzbild nicht mit einem allgemein bekannten anderen Bild, beispielsweise einem Landschaftsbild ohne das Objekt, korreliert, sondern mit einem zweiten Referenzbild, das zweckmäßigerweise mit der gleichen zoomfähigen Kamera und mit einer niedrigeren zweiten Zoomstufe aufgenommen wird. Nun kann die Position des Objekts im zweiten Referenzbild bestimmt werden. Die Positionsbestimmung ist gegebenenfalls bereits ausreichend, zum Beispiel zum Anfliegen des Objekts durch einen Flugkörper, wenn im zweiten Referenzbild genug signifikante Bildpunkte sind, beispielsweise Schlüsselpunkte mit charakteristischen Bildmerkmalen, die der Flugkörper beim Anfliegen auf das Objekt wiedererkennen kann. Ebenfalls ist es möglich, das zweite Referenzbild mit einem bekannten Landschaftsbild beziehungsweise einem Landschaftsmodell zu korrelieren und so die absolute Position des Objekts im Landschaftsbild beziehungsweise Landschaftsmodell zu bestimmen. Beide Positionsbestimmungen sind sinnvoll und vorteilhaft.

Je nachdem, wie hoch der Zoom ist, um das Objekt ausreichend im ersten Referenzbild erkennen zu können, können zwischen dem ersten und dem zweiten Referenzbild weitere Referenzbilder mit einer Zoomstufe aufgenommen werden, die zwischen der ersten und der zweiten Zoomstufe liegt. Die Position des Objekts in den Referenzbildern kann nun kaskadenartig vom ersten zum nächstfolgenden Referenzbild durch Korrelation der Bilder beziehungsweise der Schlüsselpunkte zueinander bestimmt werden, bis die Position des Objekts im letzten Referenzbild beziehungsweise zweiten Referenzbild bestimmt ist, das für den gewünschten Zweck geeignet ist, z.B. für die Korrelation mit einem Landschaftsmodell.

Das Objekt kann im ersten Referenzbild von einem Bediener optisch erkannt werden, und die Position des Objekts kann im ersten Referenzbild vom Bediener festgelegt werden, beispielsweise indem das Objekt im Bild markiert wird. Auch möglich ist das automatische Erkennen des Objekts, beispielsweise mithilfe bildverarbeitender Methoden, sodass die Position des Objekts im Bild automatisiert festgelegt wird. Allgemein kann eine Sichtlinie vom Kamerasystem zum Objekt festgelegt werden.

Die Relativposition der Schlüsselpunkte zum Objekt kann direkt oder indirekt, beispielsweise über weitere charakteristische Bildpunkte, wie zum Beispiel eine Bildecke, ein Bildrand oder dergleichen bestimmt werden. Die Position kann in Winkelgraden, Längen, und/oder eine Anzahl von Pixeln zwischen dem Objekt und dem entsprechenden Schlüsselpunkt, angegeben werden.

Zu jedem Schlüsselpunkt kann vorteilhafterweise ein mehrdimensionaler Referenzdeskriptor ermittelt werden. Die Schlüsselpunkte können mit einem Merkmalsdetektor aus den Referenzbildern ermittelt werden. Ein Merkmalsdetektor ist in der Lage, Punkte in einem Bild zu finden, die das Bild charakterisieren. Ein guter Merkmalsdetektor ist auch bei einer Skalierung, Rotation, bei einer geometrischen Transformation und Beleuchtungsveränderungen des aufgenommenen Zielobjekts in der Lage, die gleichen Zielschlüsselpunkte in dem erneut aufgenommenen Bild des Zielobjekts zu finden.

Es sind eine Reihe von geeigneten Merkmalsdetektoren bekannt, wie beispielsweise der SIFT-Merkmalsdetektor (Scale-Invariant Feature Transform), der SURF-Merkmalsdetektor (Speeded Up Robust Features), der ORB-Merkmalsdetektor (Oriented Fast and Rotated Brief), sowie weitere Verfahren. Das SIFT-Verfahren und der SIFT-Merkmalsdetektor sind beispielsweise beschrieben in Lowe, David G.: Object recognition from local scale-invariant features; Computer vision, 1999; The proceedings of the seventh IEEE international conference on Bd. 2 IEEE, 1999, S. 1150-1157, und in Lowe, David G.: Distinctive image features from scale-invariant keypoints; International journal of computer vision 60 (2004), Nr. 2, S. 91-110. Das SURF-Verfahren mit dem SURF-Merkmalsdetektor ist beispielsweise beschrieben in Bay, Herbert; Tuytelaars, Tinne; Van Gool, Luc: Surf: Speeded up robust features; Computer Vision-ECCV 2006. Springer, 2006, S. 404-417. Und das ORB-Verfahren mit dem ORB-Merkmalsdetektor ist beispielsweise beschrieben in Rublee, Ethan; Rabaud, Vincent; Konolige, Kurt; Bradski, Gary: ORB: an efficient alternative to SIFT or SURF. In: Computer Vision (ICCV), 2011 IEEE International Conference on IEEE, 2011, S. 2564-2571. Andere bekannte Verfahren für eine Merkmalsfindung und einen automatischen Merkmalsvergleich sind beispielsweise Laplacian of Gaussian (LoG), sowie Normalized Cross-Correlation Function (NCCF). Es können aber auch andere Verfahren verwendet werden, die für einen automatischen Vergleich von Schlüsselpunkten bzw. Deskriptoren geeignet erscheinen.

Vor der Ermittlung der Schlüsselpunkte kann das Zielbild, aus dem die Schlüsselpunkte gewonnen werden sollen, mit einem Gauß-Filter geglättet werden, um es von Bildrauschen zu bereinigen. Nach dem Ermitteln der Schlüsselpunkte können diese in einem weiteren Verfahrensschritt auf ihre Robustheit untersucht werden, wobei letztendlich zweckmäßigerweise nur solche Schlüsselpunkte ausgewählt werden, die vorgegebenen Stabilitätsansprüchen genügen. Robust sind beispielsweise solche Schlüsselpunkte, die unempfindlich gegen perspektivische Verzerrung und/oder Rotation sind. Dafür geeignet sind beispielsweise Schlüsselpunkte, deren Bildeigenschaften von ihrem Hintergrund abweichen. Eine Rotationsstabilität kann erreicht werden, wenn einem Schlüsselpunkt eine oder mehrere Orientierung/en zugewiesen wird, basierend auf den Orientierungen der umliegenden Bildgradienten. Zukünftige Berechnungen beziehungsweise Vergleiche können nun auf der Grundlage von Bilddaten durchgeführt werden, die relativ zu den zugewiesenen Orientierungen, und insbesondere auch Skalierungen und Positionierungen, transformiert wurden, um Invarianz für eben diese Transformationen zu gewährleisten.

Aus den so gefundenen Schlüsselpunkten können nun die Deskriptoren ermittelt werden. Hierzu werden die den Schlüsselpunkt umgebenden Bildgradienten ermittelt, die in einem mehrdimensionalen Merkmalsvektor zusammengefasst werden können. Auch dieser Merkmalsvektor ist zweckmäßigerweise robust gegen Änderungen in der Beleuchtung, der Verzerrung, der Rotation und dergleichen. Ein Deskriptor enthält neben seinen Bildmerkmalen am Schlüsselpunkt zweckmäßigerweise auch die Koordinaten seines Schlüsselpunkts, sodass der Schlüsselpunkt im Deskriptor enthalten ist.

Ein nachfolgender Vergleich der Zieldeskriptoren aus dem Zielbild mit zuvor ermittelten Referenzdeskriptoren erfolgt mit einem geeigneten Algorithmus, beispielsweise dem Random Sample Consensus-Algorithmus (RANSAC) oder dem FLANN-Matcher. Allgemein gesprochen kann zum Vergleich von Deskriptoren die Distanzfunktion verwendet werden, die die Vektordistanz, also den Richtungsunterschied zweier Vektoren, bestimmt. Dies kann jedoch bei Bildern, in denen sich gewisse Objekte wiederholen, zu mehrdeutigen Ergebnissen führen. In der Praxis kann deshalb ein Distanzquotient verwendet werden, wobei der beste Match, also der kleinste Abstand, durch den zweitbesten Match geteilt wird. Sehr ähnlichen Ergebnissen kann nun eine kleinere Wahrscheinlichkeit zugeordnet werden, dass der gefundene Match korrekt ist. Beim SIFT-Verfahren können k-d Trees oder andere Suchbäume verwendet werden. Für den Brief-Merkmalsdetektor aus dem ORB-Verfahren kann die Hamming-Distanz der Bit Strings der Deskriptoren verwendet werden. Um die Suche der nächsten Nachbarn zu optimieren, kann auch Locality Sensitive Haching verwendet werden, sodass ähnliche Bit Strings so gehacht werden, dass sie mit großer Wahrscheinlichkeit in denselben Baskets landen.

Beispielhaft wird im Folgenden der SIFT-Merkmalsdetektor ausführlicher beschrieben. Von dem der Analyse zu unterziehenden Bild werden unterschiedlich stark verschwommene Kopien des Bilds erstellt, indem ein Gauß-Filter mehrfach mit zunehmender Stärke auf das Bild angewendet wird oder der gleichbleibende Gauß-Filter immer wieder auf das letzte gefilterte Bild angewendet wird. In der Verschwimmungsskala nebeneinander liegende Bilder werden nun voneinander subtrahiert, was als Difference of Gaussian (DoG) bezeichnet wird. Die unterschiedlich stark verschwommenen Kopien des Bilds und die DoG-Bilder bilden zusammen eine Oktave. Da der Gauß-Filter kontrastreiche Regionen im Bild stark verändert, führt eine Subtraktion der Bilder dazu, dass solche Stellen, an denen sich die Bilder stark verändert haben, also kontrastreiche Regionen, wie Kanten und Ecken, gefunden werden. Die Schlüsselpunkte können nun, wie in der oben angegebenen Veröffentlichung von Lowe aus dem Jahr 2004 vorgeschlagen, gefunden werden. Hierbei werden Schlüsselpunkte, die in einer Fläche liegen und deren Gradienten insofern klein sind, ausgeschieden. Liegt der Schlüsselpunkt auf einer Kante, so ist der Gradient senkrecht zur Kante groß und der Gradient parallel zur Kante klein. Auch solche Schlüsselpunkte werden entfernt. Ein auf einer Ecke liegender Schlüsselpunkt beinhaltet zwei orthogonale und große Gradienten. Solche Schlüsselpunkte sind besonders robust und können beibehalten werden.

Da hierbei nur scharfe Konturen im Ausgangsbild gefunden werden, nicht jedoch ebenfalls signifikante weichere Konturen, wird nun - oder bereits vor der Berechnung der Schlüsselpunkte - eine nächsthöhere Oktave gebildet, indem beispielsweise von dem verschwommensten oder einem verschwommenen Bild nur jeder zweite Pixel verwendet wird oder das Ausgangsbild verpixelt wird. In einer nächsthöheren Oktave bzw. Bildoktave weist das der Erstellung der Deskriptoren zugrunde liegende Bild also eine niedrigere Auflösung auf als das Bild der niedrigeren Oktave. Die niedrigere Auflösung kann geschaffen werden, indem z.B. je eine Gruppe von Pixeln, insbesondere 2 Pixel oder n x n Pixel, beispielsweise 2 x 2 Pixel, zu einem Pixel zusammengefasst werden, z.B. durch Addition, Mittelwertbildung oder Herausnehmen von nur einem Pixel aus der Gruppe. In dieser zweiten Oktave werden nun wiederum die Schlüsselpunkte bestimmt. Die Schlüsselpunkte umfassen neben ihren x- und y-Koordinaten auch einen Skalenfaktor, also die Angabe der Oktave, aus der sie stammen. Auf diese Weise wird dem Bild des Zielobjekts eine Vielzahl von Schlüsselpunkten zugewiesen. Die den Schlüsselpunkten zugeordneten bzw. die Schlüsselpunkte enthaltenden Deskriptoren enthalten also zweckmäßigerweise auch die Angabe der Oktave, also den Skalenfaktor.

Insbesondere bei Verfahren, die zügig erfolgen sollen, ist es vorteilhaft, wenn die Referenzbilder zügig hintereinander aufgenommen werden. Hierfür erfolgt entsprechend der Erfindung die Aufnahme des zweiten Referenzbilds mit der gleichen Kamera erfolgen und unmittelbar hinter der Aufnahme des ersten Referenzbilds. Zweckmäßigerweise kann die Aufnahme des zweiten Referenzbilds ohne Kameraverschwenkung vom Aufnahmebereich des ersten Referenzbilds weg erfolgen. Hierbei können nicht nur die beiden Referenzbilder, sondern auch zwischenliegende weitere Referenzbilder in der gleichen Weise, also mit der gleichen Kamera und unmittelbar hintereinander und insbesondere ohne Kameraverschwenkung aufgenommen werden. Unter einer unmittelbar hintereinander erfolgenden Aufnahmereihe kann ein einziger Aufnahmevorgang mit mehreren Bildern, beispielsweise eine automatische Aufnahmereihe, verstanden werden. Der Aufnahmevorgang wird zweckmäßigerweise durch einen einzigen Aufnahmebefehl ausgelöst, der von einem Bediener oder einer Steuereinheit gegeben werden kann. Der Aufnahmevorgang der mehreren Bilder erfolgt zweckmäßigerweise innerhalb von einer Minute, insbesondere innerhalb von 15 Sekunden, zweckmäßigerweise innerhalb von fünf Sekunden. Die Aufnahmereihe umfasst mindestens zwei Bilder, wobei weitere Bilder, insbesondere mindestens vier Bilder, in einer Reihe mit unterschiedlichen Zoomstufen vorteilhaft sind. Zweckmäßigerweise werden alle Bilder der Aufnahmereihe mit stets niedrigerer Zoomstufe als bei dem vorhergehend aufgenommenen Referenzbild aufgenommen. Der Blickwinkel beziehungsweise sogenannte Field of view (FOV) wird somit bei jedem Bild - bei gleicher Bildgröße bzw. Pixelzahl der Bilder - größer gewählt als beim jeweils vorhergehenden Bild.

In einer weiteren vorteilhaften Ausführungsform der Erfindung ist der Bildausschnitt des ersten Referenzbilds, beispielsweise der Bildausschnitt in der Landschaft oder der Umgebung des Objekts, vollständig im Bildausschnitt des zweiten Referenzbilds enthalten. Hierdurch kann eine Korrelation aller im ersten Referenzbild aufgefundenen Schlüsselpunkte mit Punkten des zweiten Referenzbilds erfolgen. Das erste Referenzbild kann, muss jedoch nicht mittig innerhalb des zweiten Referenzbilds liegen. Das erste Referenzbild kann auch am Rand des zweiten Referenzbilds liegen oder sogar darüber hinausgehen, wenn ein deutliches Verschwenken der Kamera während der Aufnahme der Bildreihe sinnvoll ist. Das zweite Referenzbild enthält entsprechend der Erfindung auf jeden Fall einen Teil der Umgebung um das erste Referenzbild, der im ersten Referenzbild nicht enthalten ist. Beide Bilder können die gleiche Bildgröße, also die gleiche Anzahl von Pixeln, Bildpunkten oder dergleichen aufweisen.

Entsprechend der Erfindung werden N ≥ 2 Referenzbilder mit jeweils niedrigerer Zoomstufe als das jeweils vorhergehende Referenzbild aufgenommen und die Position des Objekts im jeweils nachfolgenden Referenzbild wird anhand der Relativpositionen der im nachfolgenden Referenzbild wiedergefundenen Schlüsselpunkte aus dem jeweils vorhergehenden Referenzbild bestimmt. Hierdurch kann ein kaskadenartiges Durchreichen der Position des Objekts relativ zu Schlüsselpunkten durch die Referenzbilder erfolgen.

Das zweite Referenzbild kann ein Referenzbild aus einer Serie von Referenzbildern sein und weist in dieser Serie zweckmäßigerweise die niedrigste Zoomstufe auf. Die Aufnahmereihenfolge der Referenzbilder in der Serie ist hierbei nicht ausschlaggebend, erfolgt jedoch zweckmäßigerweise stufenweise mit immer kleinerer Zoomstufe.

Das Auffinden von Schlüsselpunkten im jeweils nächstgrößeren Bild, die mit den Schlüsselpunkten des vorhergehenden Bilds korrelieren, kann erleichtert werden, wenn die Zoomstufen in ihrem Bildverhältnis den Oktaven bei der Erstellung der Schlüsselpunkte entsprechen. Werden zur Bildung einer nächsthöheren Oktave beispielsweise jeweils vier Bildpunkte zu einem zusammengefasst, so ist die Zoomstufe des nächstgrößeren Bilds zweifach niederer, sodass also auch hier vier Pixel zu einem einzigen Pixel zusammengefasst sind.

Die Bestimmung der Position des Objekts in einer Landschaft kann dadurch einfach ermöglicht werden, dass das zweite Referenzbild mit einem Landschaftsmodell verglichen wird und die Position des Objekts im Landschaftsmodell anhand der Relativpositionen zu Schlüsselpunkten im Landschaftsmodell bestimmt wird, denen Schlüsselpunkte im zweiten Referenzbild zugeordnet wurden. Die Korrelation des zweiten Referenzbilds mit dem Landschaftsmodell, das als eine Anzahl von Bildern oder in einer dreidimensional modellierten Art und Weise entweder bildhaft oder als mathematisches Modell vorliegen kann, geschieht zweckmäßigerweise entfernt von der Kamera, die die Referenzbilder aufgenommen hat, beispielsweise in einer Einsatzzentrale. Die Korrelation kann durch einen Vergleich von Schlüsselpunkten bzw. deren Deskriptoren erfolgen.

Die Schlüsselpunkte des zweiten Referenzbilds und die Position des Objekts relativ zu den Schlüsselpunkten werden zweckmäßigerweise von einem Kamerasystem ermittelt, das die Kamera und eine entsprechende Auswerteeinheit umfasst. Kamera und Auswertesystem sind hierbei zweckmäßigerweise miteinander verdrahtet, insbesondere unmittelbar miteinander verdrahtet, sodass ein Datenaustausch zügig und fehlerunanfällig erfolgen kann. Das Kamerasystem kann die Daten, die für den Vergleich mit dem Landschaftsmodell benötigt werden, verdrahtet oder drahtlos an die entsprechende entfernte Auswerteeinheit übertragen, beispielsweise über Funk.

Die Position des Objekts im Bild, einer Umgebung und/oder einer Landschaft, kann für vielfältige Zwecke verwendet werden. Eine besonders vorteilhafte Ausführungsform der Erfindung sieht vor, dass die Position des Objekts, insbesondere im Landschaftsmodell, an einen Flugkörper zum Anfliegen auf das Objekt übergeben wird. Weiter ist es vorteilhaft, wenn die Referenzbilder an einen Flugkörper zum Anfliegen auf das Objekt übergeben werden. Der Flugkörper kann seinerseits Bilder von der Umgebung des Objekts aufnehmen und diese mit den Referenzbildern korrelieren. Durch Auffinden der Schlüsselpunkte kann das Objekt in den vom Flugkörper aufgenommenen Bildern erkannt werden, zumindest die Position des Objekts kann in den Bildern bestimmt werden, und der Flugkörper kann das Objekt, auch wenn dieses in den vom Flugkörper aufgenommenen Bildern noch nicht ausreichend optisch sichtbar ist, anfliegen.

Insbesondere bei einer Verwendung der Position des Objekts zum Anfliegen auf das Objekt sollte vermieden werden, dass durch Korrelationsfehler, beispielsweise durch fehlerhafte Bedienung oder schlechte Bildqualität, ein Anflug auf ein falsches Objekt erfolgt. Eine Überprüfung der Korrektheit der Position des Objekts ist daher wünschenswert. Dies kann erreicht werden, indem das zweite Referenzbild und ein weiteres Referenzbild höherer Zoomstufe mit einem Landschaftsmodell verglichen werden und die Position des Objekts im Landschaftsmodell anhand der Relativpositionen zu Schlüsselpunkten im Landschaftsmodell bestimmt wird, dem Schlüsselpunkte in einem der Referenzbilder, beispielsweise dem zweiten Referenzbild, zugeordnet wurden. Nun kann dieser Vorgang mit dem anderen Referenzbild wiederholt werden, und es kann überprüft werden, ob die beiden aufgefundenen Positionen im Landschaftsmodell übereinstimmen. Dieser Vorgang kann auch mit mehr als zwei Referenzbildern der Kamera ausgeführt werden, um eine noch höhere Sicherheit zu erhalten.

Während eine Korrelation der Referenzbilder mit beispielsweise einem Landschaftsmodell das Vorliegen des Landschaftsmodells voraussetzt und damit in der Regel nicht im Kamerasystem, das die Kamera aufweist, ausgeführt werden kann, ist es vorteilhaft, die Korrektheit der bestimmten Position des Objekts auch unmittelbar, beispielsweise durch einen Bediener, überprüfen zu lassen. Dies ist in einfacher Weise möglich, wenn das Objekt in einem nachfolgenden Verifikationsbild erneut aufgenommen wird, zweckmäßigerweise mit einer veränderten Ausrichtung der aufnehmenden Kamera. Das Verifikationsbild kann mit einem der Referenzbilder verglichen werden, die Schlüsselpunkte der beiden Bilder werden also einander zugeordnet. Das Referenzbild kann die gleiche oder eine andere Zoomstufe wie das Referenzbild aufweisen, mit dem es verglichen wird. Nun kann die Position des Objekts anhand der Relativpositionen der im Verifikationsbild wiedergefundenen Schlüsselpunkte aus dem Referenzbild bestimmt werden und die Position des Objekts kann im Referenzbild angezeigt werden. Nun kann ein Bediener, beispielsweise die Person, die die Referenzbilder mit der Kamera aufgenommen hat, überprüfen, ob sich das Objekt tatsächlich noch in dem angezeigten Ort befindet.

Je nach Zoomstufe des Verifikationsbildes kann es sein, dass das Objekt im Verifikationsbild nur schwer oder nicht zu erkennen ist. Der Bediener kann zwar abschätzen, ob sich die Markierung ungefähr an der richtigen Stelle befindet, eine exakte Positionsüberprüfung kann jedoch schwierig sein. Um auch eine exakte Überprüfung zu ermöglichen, wird im Weiteren vorgeschlagen, dass das Objekt in einem zweiten Verifikationsbild, das eine höhere Zoomstufe als das erste Verifikationsbild aufweist, aufgenommen wird, das zweite Verifikationsbild mit einem der Referenzbilder verglichen wird, die Position des Objekts anhand der Relativposition der im zweiten Verifikationsbild wiedergefundenen Schlüsselpunkte aus dem Referenzbild bestimmt wird und die Position des Objekts im zweiten Verifikationsbild angezeigt wird. Es kann also beispielsweise ein Bediener wieder zum Objekt hinzoomen, beispielsweise bis dieses ausreichend erkennbar ist, und durch den Schlüsselpunktvergleich wird die frühere Position des Objekts im Bild markiert. Der Bediener kann nun überprüfen, ob die frühere Position des Objekts im Verifikationsbild mit der tatsächlich sichtbaren Position des Objekts im Verifikationsbild übereinstimmt.

Insbesondere bei einer höheren Zoomstufe des zweiten Verifikationsbilds ist es vorteilhaft, wenn dieses die gleiche Zoomstufe wie das erste Referenzbild aufweist. Besonders vorteilhaft ist es, wenn eine Rückwärtsbildfolge von Verifikationsbildern aufgenommen wird, die in ihren Zoomstufen der Bildfolge der zuvor aufgenommenen Referenzbilder entspricht. Hierbei wird zweckmäßigerweise in jedem Verifikationsbild die Position des Objekts sichtbar angezeigt, sodass ein Bediener von Bild zu Bild den Ort des Objekts nachverfolgen kann, auch wenn dieses noch nicht im Verifikationsbild sichtbar sein sollte.

Weiter ist es vorteilhaft, wenn eine Überprüfung der Position des Objekts dann erfolgt, wenn die Position des Objekts bereits in einem Landschaftsmodell ermittelt wurde. Wird beispielsweise die Position aus dem Landschaftsmodell verwendet, um einen Flugkörper zum Objekt fliegen zu lassen, kann eine Überprüfung der tatsächlichen Position des Objekts sinnvoll sein, da sich dieses mittlerweile in der Landschaft bewegt haben kann. So kann eine Einsatzzentrale einem Bediener das Kommando der Überprüfung geben. Dieser nimmt ein oder mehrere Verifikationsbilder auf und überprüft die Position des Objekts. Hat sich das Objekt mittlerweile in der Landschaft bewegt, so ist dies zweifelsfrei erkennbar, da die Position des Objekts in den Verifikationsbildern anhand der aus den Referenzbildern ermittelten Position des Objekts bestimmt wird. Die angezeigte Position ist also noch die alte Position, sodass der Bediener die Diskrepanz unmittelbar erkennen kann. Nun kann er ein Warnsignal an die Einsatzzentrale ausgeben, und die Vorbereitung des Anflugeinsatzes oder der Anflug an sich können gestoppt werden. Außerdem können die Verifikationsbilder als neue Referenzbilder verwendet werden, und der Bestimmungsprozess kann mit diesen wiederholt werden.

Wird ein größeres Gebiet von einer Person überwacht, so kann es vorkommen, dass mehrere interessierende Objekte in der Umgebung aufgefunden wurden. Die Position eines jeden Objekts kann wie oben beschrieben bestimmt werden, beispielsweise in einem oder mehreren zugehörigen Referenzbildern, insbesondere relativ zu Schlüsselpunkten in den Referenzbildern. Soll nun eines der Objekte in der Umgebung oder Landschaft wiedergefunden werden, so kann es sein, dass die Person nicht mehr genau erinnert, wo das Objekt war und die Kamera somit nicht mehr auf das Objekt ausrichten kann.

Um das Objekt wiederzufinden ist es sinnvoll, die Position mehrerer Objekte zu Schlüsselpunkten zu speichern. Zweckmäßigerweise wird jedes Objekt mit einem Erkennungsmerkmal versehen, z.B. mit einer Nummer, einem Code, einer Textbeschreibung und/oder einem Bild, z.B. dem Referenzbild mit der höchsten Zoomstufe. Nun kann der Bediener das Objekt auswählen, z.B. indem er ein Bild des Objekts aus einer Reihe von Bildern mit unterschiedlichen Objekten auswählt.

Nun kann die Lage bzw. Ausrichtung der Kamera in die Umgebung anhand eines momentanen Bilds, das als Suchbild dient, relativ zu Schlüsselpunkten aus dem Suchbild bestimmt werden. Ist die Lage des Objekts relativ zu mindestens einigen von diesen Schlüsselpunkten bekannt, entweder unmittelbar oder mittelbar durch weitere Schlüsselpunkte, deren Lagen relativ zu den Schlüsselpunkten im Suchbild bekannt sind, so kann das Kamerasystem erkennen, ob sich die Position des Objekts im Suchbild befindet. Ist dies der Fall, so kann die Position im Suchbild angezeigt werden, und der Bediener kann - falls gewünscht - auf das Objekt zoomen, um es optisch im Bild zu erkennen.

Liegt die Position des Objekts nicht im Suchbild, so kann dem Bediener eine Richtung angezeigt werden, in die er die Kamera verschwenken muss, um die Position des Objekts in das Bildfeld zu bekommen. Sobald die Position ausreichend im Bild liegt, kann die Richtungsmarkierung beendet werden und die Position kann im Bild angezeigt werden. Auf diese Weise kann ein Bediener eine Vielzahl selbst weit entfernter Objekte auch bei einer Rundumüberwachung zügig wiederfinden.

Die Erfindung ist außerdem gerichtet auf eine Vorrichtung zum Bestimmen einer Position eines Objekts gemäß den Merkmalen von Patentanspruch 14, beispielsweise in einer Landschaft. Es wird vorgeschlagen, dass die Vorrichtung eine zoomfähige Kamera zum Aufnehmen eines ersten und eines zweiten Referenzbilds des Objekts aufweist, bei dem das zweite Referenzbild eine niedrigere Zoomstufe als das erste Referenzbild aufweist. Ferner umfasst die Vorrichtung vorteilhafterweise eine Bestimmungseinheit zum Bestimmen einer Position des Objekts im ersten Referenzbild und eine Bildverarbeitungseinheit, die dazu vorbereitet ist, Schlüsselpunkte mit charakteristischen Bildmerkmalen in den beiden Referenzbildern zu bestimmen, die Relativpositionen der Schlüsselpunkte zum Objekt in beiden Referenzbildern zu bestimmen, die Schlüsselpunkte in den Referenzbildern einander zuzuordnen und die Position des Objekts im zweiten Referenzbild anhand der Relativpositionen der Schlüsselpunkte des zweiten Referenzbilds zum Objekt zu bestimmen.

Die Bestimmungseinheit ist zweckmäßigerweise mit der Kamera verdrahtet und in einem gemeinsamen Kamerasystem integriert. Weiter umfasst die Vorrichtung bzw. das Kamerasystem zweckmäßigerweise eine Datenübertragungseinheit zum insbesondere drahtlosen Übertragen von Daten, insbesondere der Position des Objekts und/oder der Referenzbilder, zu einer entfernten Auswerteeinheit, beispielsweise in eine Einsatzzentrale.

Die bisher gegebene Beschreibung vorteilhafter Ausgestaltungen der Erfindung enthält zahlreiche Merkmale, die in einigen abhängigen Ansprüchen zu mehreren zusammengefasst wiedergegeben sind. Diese Merkmale können jedoch zweckmäßigerweise auch einzeln betrachtet und zu sinnvollen weiteren Kombinationen zusammengefasst werden, insbesondere bei Rückbezügen von Ansprüchen, sodass ein einzelnes Merkmal eines abhängigen Anspruchs mit einem einzelnen, mehreren oder allen Merkmalen eines anderen abhängigen Anspruchs kombinierbar ist. Außerdem sind diese Merkmale jeweils einzeln und in beliebiger geeigneter Kombination sowohl mit dem erfindungsgemäßen Verfahren als auch mit der erfindungsgemäßen Vorrichtung gemäß den unabhängigen Ansprüchen kombinierbar. So sind Verfahrensmerkmale auch als Eigenschaften der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung sowie die Art und Weise, wie diese erreicht werden, werden klarer und deutlicher verständlich in Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: eine Vorrichtung zum Bestimmen einer Position eines Objekts, die über Funk mit einer Einsatzzentrale verbunden ist, die über Funk einen Flugkörper steuert,
- FIG 2: ein von einer Kamera der Vorrichtung aufgenommenes Bild einer Landschaft,
- FIG 3: vier Zoomstufen des von der Kamera aufgenommenen Bilds aus FIG 2,
- FIG 4: drei der Bilder aus FIG 3, die jeweils mit einem 3D-Modell der aufgenommenen Landschaft verglichen werden und
- FIG 5: Bilder der Landschaft mit einem aufgenommenen Objekt, das sich gegenüber seiner Position aus FIG 3 weiterbewegt hat.

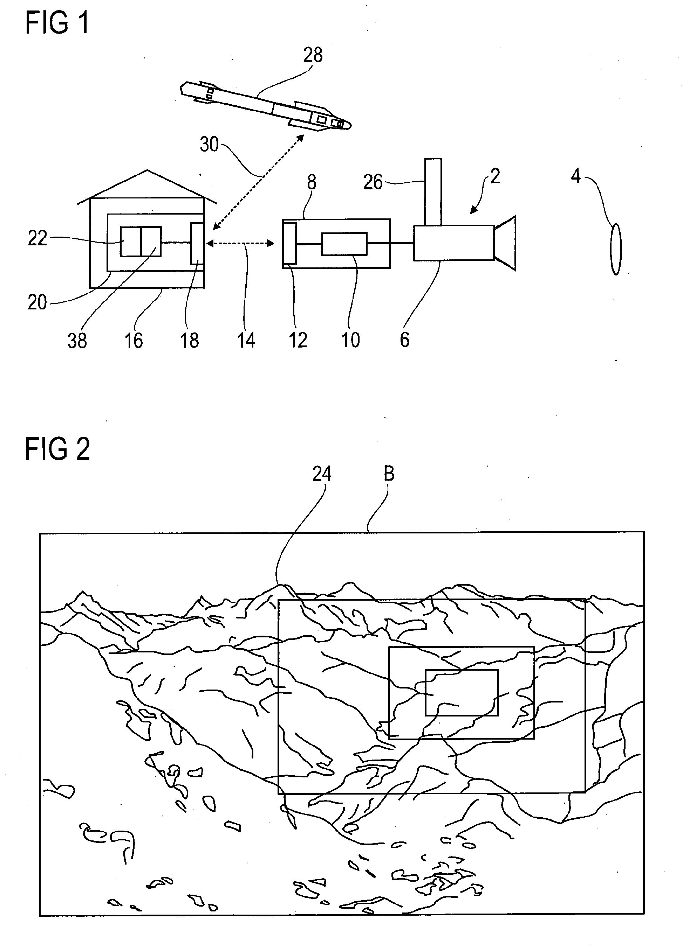

FIG 1 zeigt eine Vorrichtung 2 zum Bestimmen einer Position eines Objekts 4, die eine zoomfähige Kamera 6 und eine Bestimmungseinheit 8 zum Bestimmen der Position des Objekts 4 in einem Bild der Kamera 6 aufweist. Die Bestimmungseinheit 8 umfasst eine Bildverarbeitungseinheit 10 zum Verarbeiten der Bilder der Kamera 6 und eine Datenübertragungseinheit 12 zur drahtlosen Übertragung von Daten, die von der Bestimmungseinheit 8 erzeugt wurden und von Bildern der Kamera 6, beispielsweise über ein Funklink 14, an eine mehrere Kilometer entfernte Einheit, wie eine Einsatzzentrale 16. Die Einsatzzentrale 16 ist mit einer weiteren Datenübertragungseinheit 18 in einem Kommandostand 20 ausgestattet, der außerdem eine Kommandoeinheit 22 zum Ausgeben von Kommandos umfasst.

Ein Verfahren zum Bestimmen der Position des Objekts 4 in einer Landschaft 24 wird im Folgenden anhand der FIGen 2 bis 4 erläutert.

FIG 2 zeigt ein Bild der Landschaft 24, das durch die Kamera 6 aufgenommen wurde. Die Kamera 6 wird von einem Bediener geführt, der die Landschaft 24 nach einem Objekt 4 durchsucht. Hierzu ist die Kamera 6 zoomfähig, sodass die Landschaft 24 mithilfe eines Zooms durchsucht werden kann. Auf einer Anzeigeeinheit 26 der Kamera 6 wird dem Bediener das Bild B der Landschaft 24 angezeigt. Der Bediener kann nun durch die Kamera 6 mit einer stufenlosen Zoomvergrößerung die Landschaft 24 auf ein Objekt 4 durchsuchen. FIG 2 zeigt der Anschauung halber nur vier Zoomstufen der zoomfähigen Kamera 6, mit der der Bediener in die Landschaft 24 hineinzoomen kann und somit die Landschaft mithilfe der Anzeigeeinheit 26 wie durch ein Fernglas durchsuchen kann.

In einer Ausführungsvariante der Erfindung soll die Landschaft 24 nach potenziell bedrohlichen Objekten 4 durchsucht werden, wobei ein solches aufgefundenes Objekt 4 dann mit einem Flugkörper 28 bekämpft werden soll. Der Flugkörper 28 wird über einen Funklink 30 von der Einsatzzentrale 16 zum Objekt 4 gesteuert. Hierfür sind jedoch die genauen Koordinaten des Objekts 4 in der Landschaft 24 nötig. Der Bediener hat die Aufgabe, hierfür notwendige Daten mithilfe der Vorrichtung 2 zu beschaffen.

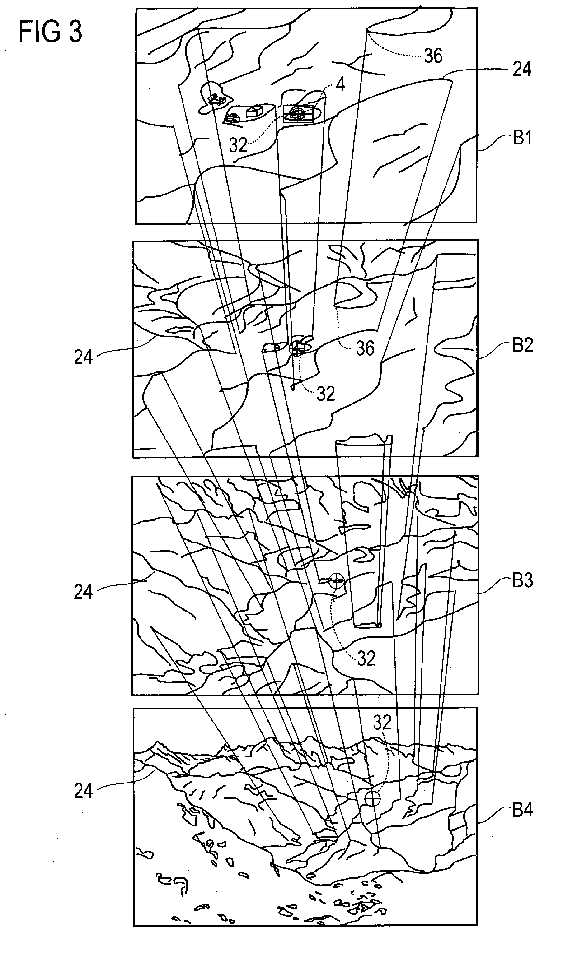

FIG 3 zeigt vier Bilder B1 bis B4, die von der Kamera 6 aufgenommen wurden. Der Bediener hat mithilfe der Kamera 6 die Landschaft 24 durchsucht und hat ein gepanzertes Fahrzeug in der Landschaft 24 als Objekt 4 im Bild B1 erkannt. Der besseren Erkennbarkeit halber sind Linien zu Bezugszeichen in den Bildern B gestrichelt gezeichnet.

Um die Position des Objekts 4 im Bild B1 bestimmen zu können, legt der Bediener eine Zielmarkierung 32 auf das Objekt 4, mit dem er die Lage des Objekts 4 im Bild B1 angibt. Die Lage der Zielmarkierung 32 im Bild B1 wird von der Bestimmungseinheit 8 gespeichert. Alternativ kann dieser manuelle Vorgang auch automatisiert ausgeführt werden, beispielsweise indem eine Bildverarbeitung das Objekt 4 als interessierendes Objekt aus dem Bild B1 heraus erkennt und dessen Position im Bild B1 bestimmt, sodass eine Zielmarkierung 32 entfallen kann oder als zusätzliches Merkmal, beispielsweise zur Überprüfung durch einen Bediener, visuell ausgegeben wird.

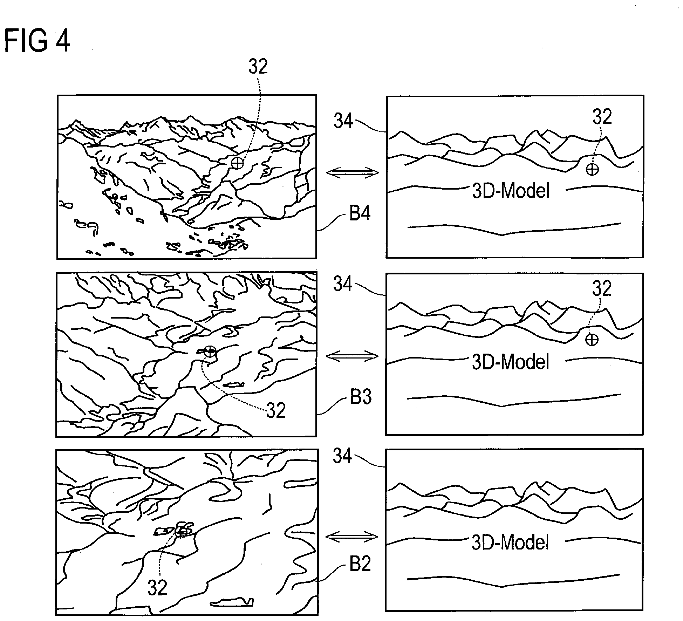

Um dem Flugkörper 28 absolute Ortskoordinaten des Objekts 4 übergeben zu können, muss die Position des Objekts 4 in der Landschaft 24 bestimmt werden. Hierzu werden charakteristische Landschaftsmerkmale verwendet, die mit einem Landschaftsmodell 34 verglichen werden, wie später zu FIG 4 erläutert ist. Aus dem stark gezoomten Bild B1 sind jedoch nicht genügend solcher Landschaftsmerkmale extrahierbar, um die Lage der im Bild B1 aufgenommenen Landschaft 24 im Landschaftsmodell erkennbar zu machen. Um einen größeren Teil der Landschaft 24 abzubilden, der genügende charakteristische Landschaftspunkte zeigt, sodass der abgebildete Landschaftsabschnitt im Landschaftsmodell 34 zweifelsfrei lokalisierbar wäre, muss die Kamera 6 weit zurückzoomen, sodass das Objekt 4 kaum noch oder nicht mehr als solches erkennbar ist. Dies ist in den Bildern B3 und B4 dargestellt, die das Objekt 4 nicht mehr oder nicht mehr genügend abbilden. Würde der Bediener die Zielmarkierung 32 im Bild B4 manuell platzieren, so wäre die Lage des Objekts 4 im Bild B4 zu ungenügend genau angegeben, und der Flugkörper 28 kann nicht genügend genau auf das Ziel 4 hin gesteuert werden.

Um eine sehr genaue Platzierung der Zielmarkierung 32 auch in einem Übersichtsbild B4 der Landschaft 24 erzeugen zu können, nimmt die Kamera 6 eine Serie von Bildern B1 bis B4 des Objekts 4 beziehungsweise der umgebenden Landschaft 24 auf. Jedes Bild B1 bis B4 der Serie weist eine andere Zoomstufe als die übrigen Bilder B1 bis B4 der Serie auf. Zweckmäßigerweise weist jedes nachfolgende Bild B2 bis B4 eine niedrigere Zoomstufe auf als das jeweils vorhergehende Bild B1 bis B3. Die Serie der Bilder B1 bis B4 ist in FIG 3 dargestellt.

Zum Bestimmen der Position des Objekts 4 in einem Referenzbild B2 bis B4 niedrigerer Zoomstufe werden nun charakteristische Bilddaten in Form von Schlüsselpunkten 36 aus dem ersten Referenzbild B1 gebildet. Zu jedem Schlüsselpunkt 36 wird ein Referenzdeskriptor gebildet. Die Schlüsselpunkte 36 können als Koordinaten bereits in ihrem jeweiligen Referenzdeskriptor enthalten sein, sodass die Schlüsselpunkte 36 nicht ohne die Referenzdeskriptoren vorliegen. Die Referenzdeskriptoren werden durch eine skaleninvariante Merkmalstransformation ermittelt. Hierunter werden Algorithmen zur Detektion und Beschreibung lokaler Merkmale in Bildern verwendet, die eine in vorgegebenen Grenzen ausreichende Invarianz gegenüber Koordinatentransformationen wie Translation, Skalierung und/oder Rotation aufweisen. Bekannte solche Verfahren sind SIFT (Skale-invariant Feature Transform) und deren Weiterentwicklungen wie Affine-SIFT, PCA-SIFT und oder SURF und dergleichen.

Die Bestimmung der Referenzdeskriptoren kann durch die Bestimmungseinheit 8 erfolgen, sodass diese an die Auswerteeinheit zum Vergleich mit dem Landschaftsmodell 34 übersendet werden können, wie im gezeigten Ausführungsbeispiel der Einsatzzentrale 16. Auf die komplette Übersendung der Referenzbilder B1 bis B4 kann verzichtet werden. Es ist selbstverständlich auch möglich, die Referenzbilder B1 bis B4 an die Auswerteeinheit beziehungsweise Einsatzzentrale 16 zu übermitteln, entweder zusammen mit den Referenzdeskriptoren oder ohne diese, die dann von der entsprechenden Auswerteeinheit ermittelt werden. Im gezeigten Ausführungsbeispiel werden die Referenzdeskriptoren von der Bestimmungseinheit 8 ermittelt und dann an die Auswerteeinheit übermittelt.

Das gleiche Verfahren wird auch auf ein nachfolgendes Referenzbild B2 bis B4 angewendet. Im Folgenden wird die Anwendung im Bild B2 beschrieben. Nun werden die in den beiden Referenzbildern B1, B2 aufgefundenen Schlüsselpunkte 36 miteinander verglichen und Schlüsselpunkte 36 im zweiten Referenzbild B2, deren Referenzdeskriptoren eine Ähnlichkeit oberhalb eines Grenzwerts mit Referenzdeskriptoren aus dem Referenzbild B1 aufweisen, werden mit deren Schlüsselpunkten 36 verbunden beziehungsweise diesen zugeordnet. Diese Zuordnung ist in FIG 3 durch gerade Linien zwischen den Referenzbildern B1 bis B4 angedeutet. Auf diese Weise können viele der Schlüsselpunkte 36 aus dem Bild B1 Schlüsselpunkten 36 aus dem Referenzbild B2 zugeordnet werden.

Außerdem wird die relative Lage des Objekts 4 beziehungsweise der Zielmarkierung 32 im Bild B1 relativ zu den Schlüsselpunkten 36 des Bilds B1 ermittelt. Aus dieser relativen Lage kann auch mit den Schlüsselpunkten 36 in Bild B2 die Lage des Objekts 4 beziehungsweise der Zielmarkierung 32 im Bild B2 berechnet werden. Die relative Lage des Objekts 4 beziehungsweise der Zielmarkierung 32 in Bild B2 ist die gleiche wie im Bild B1 zu dem korrespondierenden Schlüsselpunkten 36, wobei lediglich eine Änderung der Skala durch die unterschiedliche Zoomstufe vorliegt.

In gleicher Weise können die Schlüsselpunkte 36 aus dem zweiten Referenzbild B2 mit Schlüsselpunkten des dritten Referenzbilds B3 verglichen und einander zugeordnet werden. Ebenso ist dies mit weiteren Referenzbildern B3, B4 mit niedrigerer Zoomstufe möglich, wie durch die geraden Linien zwischen korrespondierenden Schlüsselpunkten einander in der Zoomstufe benachbarter Referenzbilder B1 bis B4 gezeigt ist. Auf diese Weise lässt sich die Lage des Objekts 4 beziehungsweise der Zielmarkierung 32 durch alle Bilder B1 bis B4 hindurch bis zum Referenzbild B4 mit der geringsten Zoomstufe hindurch verfolgen. Dies ist durch die Darstellung der Zielmarkierung 32 in allen Referenzbildern B1 bis B4 wiedergegeben.

Die Anzahl der Referenzbilder B1 bis B4 ist hierbei irrelevant und hängt einerseits von der benötigten Zoomstufe zum Erkennen des Objekts 4, den Zoomschritten zum Erreichen einer erfolgreichen Korrelation zwischen den Schlüsselpunkten 36 und von der benötigten Zoomstufe zur Korrelation mit dem Landschaftsmodell 34 ab. Insofern kann das Referenzbild B1 als erstes Referenzbild und das Referenzbild B4 als zweites Referenzbild und die Referenzbilder B2, B3 als dazwischen liegende Referenzbilder B2, B3 bezeichnet werden.

Im vorliegenden Ausführungsbeispiel werden sämtliche Referenzbilder B1 bis B4 und die darin ermittelten Schlüsselpunkte 36 und Referenzdeskriptoren an die Einsatzzentrale 16 zum Vergleich mit dem Landschaftsmodell 34 übermittelt. Dieser Vergleich wird im Folgenden anhand der Darstellung aus FIG 4 erläutert.

In der Kommandoeinheit 16 oder einer darin oder separat dazu vorhandenen Auswerteeinheit 38 liegt das Landschaftsmodell 34 als mathematisches Modell, als Bildmodell und/oder als dreidimensionales Datenmodell vor. Zunächst wird das Referenzbild B4 mit der niedrigsten Zoomstufe mit dem Landschaftsmodel 34 verglichen, wie durch den obersten Doppelpfeil in FIG 4 angedeutet ist. Dies kann ebenfalls durch skaleninvariante Verfahren oder andere bekannte Verfahren erfolgen. Hierzu können die gleichen Schlüsselpunkte 36 oder andere aus dem Referenzbild B4 gewonnene Schlüsselpunkte verwendet werden, die auf das Landschaftsmodell 34 abgestimmt sind. Die Schlüsselpunkte 36 werden zumindest teilweise Positionen im Landschaftsmodell 34 zugeordnet, sodass die Relativposition der Zielmarkierung 32 beziehungsweise des Objekts 4 zu den Schlüsselpunkten auch auf das Landschaftsmodel 34 übertragen werden kann. Hieraus ist die Position des Objekts 4 beziehungsweise der Zielmarkierung 32 im Landschaftsmodell 34 bekannt. Da die absoluten Koordinaten der Schlüsselpunkte im Landschaftsmodell 34 bekannt sind, können nun auch die absoluten Ortskoordinaten des Objekts 4 bestimmt werden. Der Anschaulichkeit halber ist die Zielmarkierung 32 im Landschaftsmodell 34 dargestellt, um zu zeigen, dass die absolute Position des Objekts 4 im Landschaftsmodell 34 aufgefunden wurde.

Zur Überprüfung der absoluten Position wird das gleiche Verfahren nun mit dem Referenzbild B3 der nächst höheren Zoomstufe erneut durchgeführt. Beim gezeigten Ausführungsbeispiel reichen die in der Landschaft 24 abgebildeten Schlüsselpunkte 36 auch in diesem Referenzbild B3 aus, um das Objekt 4 beziehungsweise die Zielmarkierung 32 im Landschaftsmodell 34 eindeutig festzulegen. Dieser Vorgang wird so oft mit dem jeweils nachfolgendem Referenzbild B2, B1 der nächst höheren Zoomstufe wiederholt, bis die Zielmarkierung 32 beziehungsweise das Objekt 4 nicht mehr mit ausreichender Zuverlässigkeit im Landschaftsmodell 34 aufgefunden werden kann. Dies wird in der Regel daran liegen, dass das betreffende Referenzbild B2 nicht von der Anzahl genügende oder von der Qualität ausreichende Schlüsselpunkte für eine zuverlässige Korrelation mit dem Landschaftsmodell 34 zur Verfügung stellt. Im gezeigten Ausführungsbeispiel schlägt die Korrelation des Referenzbildes B2 mit dem Landschaftsmodell 34 fehl.

Allerdings war die Korrelation der beiden Referenzbilder B3, B4 mit dem Landschaftsmodell 34 erfolgreich, sodass die beiden aufgefundenen Positionen im Landschaftsmodell 34 miteinander verglichen werden können. Bei einem Abweichen der beiden Positionen kann manuell oder automatisiert entschieden werden, ob die als zuverlässiger geltende Position dennoch verwendet wird, dies wird in der Regel die Position aus dem Referenzbild B4 der geringsten Zoomstufe sein. Es ist jedoch empfehlenswert, bei mehreren ausreichend qualitativen Korrelationen von mehreren Referenzbildern und dennoch voneinander abweichenden Positionen des Objekts 4 beziehungsweise der Zielmarkierung 32 die Position als unzuverlässig zu verwerfen und neue Bilder mit der Kamera 6 anzufertigen.

Die Absolutposition des Objekts 4 in der Landschaft 24 kann nun über den Funklink 30 an den Flugkörper 28 übermittelt werden, und dieser kann das Objekt 4 präzise anfliegen.

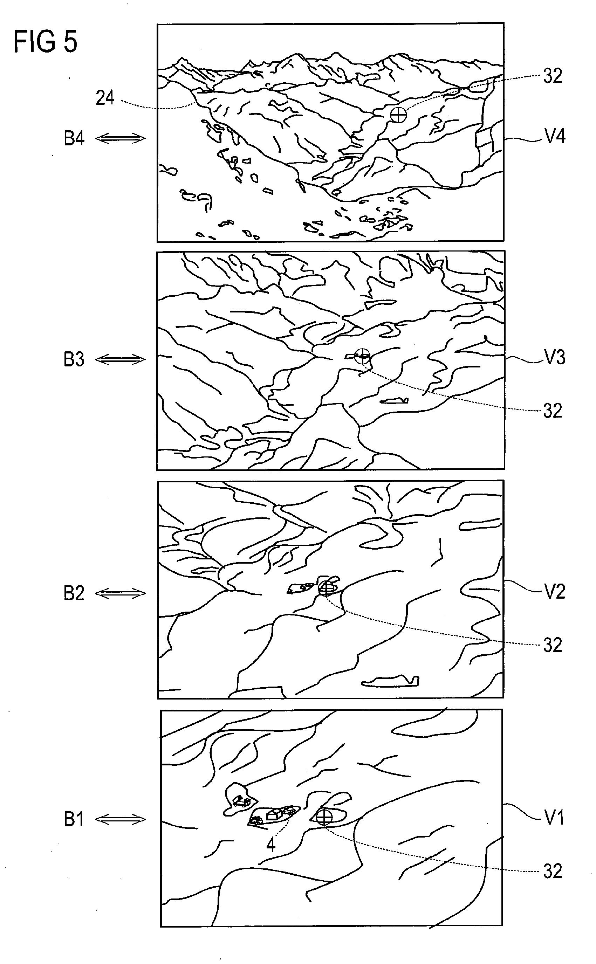

Zwischen der Verwertung der Position des Objekts 4, beispielsweise durch das Anfliegen des Flugkörpers 28 auf das Objekt 4 und der vorhergehenden Erzeugung der Kamerabilder beziehungsweise Referenzbilder B1 bis B4 kann eine größere Zeitspanne vergangen sein, in der eine Bewegung des Objekts 4 in der Landschaft 24 nicht unwahrscheinlich ist in einem solchen Fall ist es vorteilhaft, die Position des Objekts 4 in der Landschaft 24 zu überprüfen. Dies ist im Folgenden anhand der Darstellung aus FIG 5 erläutert.

FIG 5 zeigt vier Verifikationsbilder V1 bis V4 der Landschaft 24, die von der Kamera 6 zu einem späteren Zeitpunkt als die Referenzbilder B1 bis B4 aufgenommen wurden. Auch aus diesen Verifikationsbildern V1 bis V4, die zweckmäßigerweise mit den gleichen Zoomstufen wie die Referenzbilder B1 bis B4 aufgenommen wurden, werden Schlüsselpunkte 36 und zugehörige Referenzdeskriptoren ermittelt. Die Schlüsselpunkte der Verifikationsbilder V1 bis V4 werden mit den Schlüsselpunkten der Referenzbilder B1 bis B4 verglichen, wie durch die Doppelpfeile in FIG 5 veranschaulicht ist. Es werden also die Verifikationsdeskriptoren mit den Referenzdeskriptoren der betreffenden Bilder miteinander verglichen und Schlüsselpunkte mit ausreichend zueinander passenden Deskriptoren in den einander zugeordneten Bildern werden einander zugeordnet.

Aus der bekannten Lage des Objekts 4 beziehungsweise der Zielmarkierung 32 zu den Schlüsselpunkten der Referenzbilder B1 bis B4 kann nun anhand der Lage der Schlüsselpunkte aus den Verifikationsbildern V1 bis V4 die Lage des Objekts 4 beziehungsweise der Zielmarkierung 32 in den Verifikationsbildern V1 bis V4 ermittelt werden. Diese Lage beziehungsweise diese Position wird auf den Verifikationsbildern V1 bis V4 visuell angezeigt, wie durch die vier Zielmarkierungen 32 in den Verifikationsbildern V1 bis V4 in FIG 5 dargestellt ist.

Der Bediener kann nun Zoomstufe für Zoomstufe überprüfen, ob das Objekt 4 noch an der zuvor ermittelten Position ist. Aus dem Verifikationsbild V1 höchster Zoomstufe aus FIG 5 ist erkennbar, dass die Zielmarkierung 32 zwar noch an der gleichen Stelle ist, wie beim zugeordneten Referenzbild B1, das Objekt 4 jedoch auf die benachbarte Lichtung gefahren ist und sich somit in einer anderen Position in der Landschaft 24 befindet. Eine entsprechende Mitteilung kann nun vom Bediener an die Einsatzzentrale 16 übermittelt werden. Dies ginge auch automatisiert, indem die neue Position des Objekts 4 mit einer neuen Zielmarkierung definiert wird, entweder durch den Bediener oder automatisch mittels Bilderkennung, und diese Position durch die Verifikationsbilder V2 bis V4 wie oben zu den Referenzbildern B1 bis B4 beschrieben, hindurchgereicht und dann auch an die Einsatzzentrale 16 übermittelt wird. Der Einsatzzentrale 16 ist nun die neue Position des Objekts 4 bekannt und die neue Position kann verwendet werden, z.B. zur Steuerung des Flugkörpers 28, oder erneut überprüft werden.

Beispielsweise wird die erste Position dem Flugkörper 28 vor dem Start übermittelt, und während des Flugs des Flugkörpers 28 wird die Position überprüft, wie oben beschrieben, und der Flug wird anhand der neuen Position korrigiert.

Der Aufnahmebereich eines Referenzbildes B1 bis B3 kann, muss aber nicht vollständig innerhalb des Aufnahmebereichs des nächsthöheren Referenzbilds B2 bis B4 liegen. Einander nachfolgende Referenzbilder B1 bis B4 müssen jedoch in zumindest einem Teilbereich überlappen, um die Zuordnung von Schlüsselpunkten in den beiden benachbarten Referenzbildern B1 bis B4 zu ermöglichen. Sollte sich das Objekt 4 in einer eher charakterlosen Umgebung der Landschaft 24 befinden, kann ein Verschwenken der Kamera während der Aufnahme der Bildserie mit den Referenzbildern B1 bis B4 vorteilhaft sein. Dies ist in FIG 2 angedeutet, in dem die Bildausschnitte der Referenzbilder B1 bis B4 in der Landschaft 24 wiedergegeben sind. Es ist zu sehen, dass die Kamera 6 während der Aufnahme der Bildserie nach links verschwenkt wurde.

Die Verifikationsbilder können aus der gleichen Perspektive wie die Referenzbilder B1 bis B4 aufgenommen werden, wobei die Kamera 6 in den beiden Bildserien auch zueinander verschwenkt sein kann. Es ist jedoch auch möglich, dass die Verifikationsbilder V1 bis V4 aus einer anderen Perspektive beziehungsweise einem anderen Raumwinkel auf das Objekt 4 gerichtet sind, sodass die Landschaft 24 perspektivisch anders aussieht. Durch die in gewissen Grenzen gewahrte Rotationsinvarianz der Schlüsselpunkte 36 beziehungsweise deren Deskriptoren kann die Position des Objekts 4 beziehungsweise der Zielmarkierung 32 in den Verifikationsbildern V1 bis V4 auch aus einer anderen Perspektive gefunden werden. Es ist auch möglich, dass die Verifikationsbilder V1 bis V4 mit einer anderen Kamera als die Kamera 6, die die Referenzbilder B1 bis B4 aufgenommen hat, aufgenommen werden. Hierbei ist es sinnvoll, wenn die Kameras 6 baugleich oder zumindest in der Betriebsweise gleich sind.

Aus FIG 2 ist ersichtlich, dass die Bildausschnitte eines Referenzbildes B2 bis B4 einer höheren Zoomstufe ein Viertel des Bildausschnitts des Referenzbilds B1 bis B3 der nächst höheren Zoomstufe groß sind. Hierdurch entsprechen die Zoomstufen in ihrem Bildverhältnis den Oktaven bei der Erstellung der Schlüsselpunkte. Dies erleichtert die Erstellung und den Vergleich von Schüsselpunkten beziehungsweise von Referenzdeskriptoren.

Aus FIG 2 ist zu sehen, dass ein größeres Landschaftsgebiet von einer Person überwacht wird. Die Person hat das Gebiet auf interessierende Objekte 4 durchsucht und hat mehrere solcher Objekte 4 gefunden. Jedes Objekt 4 wurde hinsichtlich seiner Lage in den Bildern B bzw. zu den Schlüsselpunkten 36 bestimmt, wobei die Bilder B zu jedem Objekt 4 verschieden sein können.

Später erhält die Person bzw. der Bediener der Kamera 6 den Befehl, die Position eines bestimmten Objekts 4 zu überprüfen, z.B. weil ein Flugkörper 28 seinen Flug zum Objekt 4 begonnen hat und innerhalb der nächsten 60 Sekunden die angegebene Position erreichen wird. Innerhalb dieser Zeit muss die Position bestätigt werden, da sonst der Flug abgebrochen oder zu einem anderen Objekt umgeleitet wird.

Der Bediener muss nun das Objekt 4 in der Umgebung oder Landschaft zügig wiederfinden, um dessen Position neu zu bestimmen. Es kann nun sein, dass die Person sich nicht mehr genau daran erinnert, wo das Objekt 4 war und die Kamera somit nicht mehr auf das Objekt 4 ausrichten kann.

Um das Objekt wiederzufinden, wurde jedes Objekt 4 mit einem Erkennungsmerkmal versehen, z.B. mit einer Nummer, einem Code, einer Textbeschreibung und/oder einem Bild, z.B. dem Referenzbild mit der höchsten Zoomstufe. Nun kann der Bediener das Objekt 4 auswählen, z.B. indem er ein Bild des Objekts 4 aus einer Reihe von Bildern mit unterschiedlichen Objekten auswählt, oder indem er einen Objektcode eingibt, der ihm von der Einsatzzentrale 16 übermittelt wurde.

Nun kann die Lage bzw. Ausrichtung der Kamera in die Umgebung anhand eines Suchbilds relativ zu Schlüsselpunkten 36 aus dem Suchbild bestimmt werden. Ist die Lage des Objekts 4 relativ zu mindestens einigen von diesen Schlüsselpunkten 36 bekannt, so kann das Kamerasystem erkennen, ob sich die Position des Objekts 4 im Suchbild befindet. Ist dies der Fall, so kann die Position im Suchbild angezeigt werden, und der Bediener kann - falls gewünscht - auf das Objekt 4 zoomen, um es optisch im Bild zu erkennen.

Liegt die Position des Objekts 4 nicht im Suchbild, so kann dem Bediener eine Richtung angezeigt werden, in die er die Kamera 6 verschwenken muss, um die Position des Objekts 4 in das Bildfeld zu bekommen. Sobald die Position ausreichend im Bild liegt, kann die Richtungsmarkierung beendet werden, und die Position kann im Bild angezeigt werden. Auf diese Weise kann ein Bediener eine Vielzahl selbst weit entfernter Objekte 4 auch bei einer Rundumüberwachung zügig wiederfinden.

Liegt die Position nicht im momentanen Bildfeld der Kamera, so kann es sein, dass die Lage der Position zu keinem der aus dem Suchbild ermittelten momentanen Schlüsselpunkte 36 bekannt ist. Allerdings ist die Lage zu solchen Schlüsselpunkten 36 bekannt, deren Lage zu den momentanen Schlüsselpunkten bekannt ist, entweder direkt oder indirekt über weitere Schlüsselpunkte 36, deren Lagen relativ zu den Schlüsselpunkten 36 im Suchbild bekannt sind. Es ist auch möglich, dass die Vorrichtung 2 aus mehreren Bildern ein Panoramabild aufbaut oder zumindest die Schlüsselpunkte 36 aus mehreren einander überlappenden Bildern, z.B. mehreren nebeneinander liegenden Bildern B4, so in einen Lagebeziehung zueinander setzt, als wäre ein Panoramabild aufgebaut. So können die Schlüsselpunkte z.B. in einer Bildtapete - mit oder ohne konkretes Panoramabild - eingefügt werden, sodass die Lagen aller Schlüsselpunkte 36 zueinander bekannt ist.

Ein besonders zügiges Wiederfinden eines Objekts 4 ist möglich, indem den Objekten 4 jeweils ein Objektcode zugeordnet wurde und der Objektcode des wiederzufindenden bzw. zu überprüfenden Objekts in die Vorrichtung 2 eingegeben oder ihr übermittelt wird, z.B. zusammen mit einem Befehlscode zur Ausrichtung der Kamera 6 auf das Objekt 4 und/oder zur automatischen Überprüfung der Position des Objekts 4. Nun kann die Kamera 6 automatisch auf das Objekt 4 ausgerichtet werden, z.B. nach einer Bestätigung durch den Bediener. Ggf. kann die Position mittels Bildverarbeitung automatisiert erkannt werden, z.B. indem der Vorrichtung ein Bild des Objekts 4 bekannt ist, insbesondere aus einem vorhergehenden Bild B1 bis B4 der Kamera 6.

### Bezugszeichenliste

- 2: Vorrichtung
- 4: Objekt
- 6: Kamera
- 8: Bestimmungseinheit
- 10: Bildverarbeitungseinheit
- 12: Datenübertragungseinheit
- 14: Funklink
- 16: Einsatzzentrale
- 18: Datenübertragungseinheit
- 20: Kommandostand
- 22: Kommandoeinheit
- 24: Landschaft
- 26: Anzeigeeinheit
- 28: Flugkörper
- 30: Funklink
- 32: Zielmarkierung
- 34: Landschaftsmodell
- 36: Schlüsselpunkt
- 38: Auswerteeinheit
- B: Referenzbild
- V: Verifikationsbild

## Patentansprüche

1. Verfahren zum Bestimmen einer Position eines Objekts (4), bei dem
a) ein erstes Referenzbild (B1) des Objekts (4) mit einer ersten Zoomstufe einer zoomfähigen Kamera (6) aufgenommen wird, eine Position des Objekts (4) im Referenzbild (B1) bestimmt wird, Schlüsselpunkte (36) mit charakteristischen Bildmerkmalen im Referenzbild (B1) ermittelt werden, im Referenzbild (B1) die Relativpositionen der Schlüsselpunkte (36) zum Objekt (4) bestimmt werden,
b) ein das erste Referenzbild (B1) überlappendes zweites Referenzbild (B2, B3, B4) mit einer niedrigeren zweiten Zoomstufe aufgenommen wird, Schlüsselpunkte (36) mit charakteristischen Bildmerkmalen im zweiten Referenzbild (B2, B3, B4) ermittelt werden, die Schlüsselpunkte (36) in den Referenzbildern (B1, B2, B3, B4) einander zugeordnet werden und die Position des Objekts (4) im zweiten Referenzbild (B2, B3, B4) anhand der Relativpositionen der Schlüsselpunkte (36) des zweiten Referenzbilds (B2, B3, B4) zum Objekt (4) bestimmt wird,
wobei
c) die Aufnahme des zweiten Referenzbilds (B2, B3, B4) mit der gleichen Kamera (6), unmittelbar hinter der Aufnahme des ersten Referenzbilds (B1) erfolgt und das zweite Referenzbild (B2, B3, B4) auf jeden Fall einen Teil der Umgebung um das erste Referenzbild (B1) enthält, der im ersten Referenzbild (B1) nicht enthalten ist,
d) N ≥ 2 Referenzbilder (B2, B3, B4) mit jeweils niedrigerer Zoomstufe als das jeweils vorhergehende Referenzbild (B1, B2, B3) aufgenommen werden und die Position des Objekts (4) im jeweils nachfolgenden Referenzbild (B2, B3, B4) anhand der Relativpositionen der im nachfolgenden Referenzbild (B2, B3, B4) wiedergefundenen Schlüsselpunkte (36) aus dem jeweils vorhergehenden Referenzbild (B1, B2, B3) bestimmt wird.

2. Verfahren nach Anspruch 1,
wobei die Aufnahme des zweiten Referenzbilds (B2, B3, B4) ohne Kameraverschwenkung vom Aufnahmebereich des ersten Referenzbilds (B1) weg erfolgt.

3. Verfahren nach Anspruch 1 oder 2,
wobei der Bildausschnitt des ersten Referenzbilds (B1) vollständig im Bildausschnitt des zweiten Referenzbilds (B2, B3, B4) enthalten ist.

4. Verfahren nach einem der vorhergehenden Ansprüche,
wobei das zweite Referenzbild (B4) ein Referenzbild (B4) aus einer Serie von Referenzbildern (B1, B2, B3, B4) ist und in dieser Serie die niedrigste Zoomstufe aufweist.

5. Verfahren nach einem der vorhergehenden Ansprüche,
wobei die Zoomstufen in ihrem Bildverhältnis den Oktaven bei der Erstellung der Schlüsselpunkte (36) entsprechen.

6. Verfahren nach einem der vorhergehenden Ansprüche,
wobei das zweite Referenzbild (B2, B3, B4) mit einem Landschaftsmodell (34) verglichen wird und die Position des Objekts (4) im Landschaftsmodell (34) anhand der Relativpositionen zu Schlüsselpunkten (36) im Landschaftsmodell (34) bestimmt wird, denen Schlüsselpunkte (36) im zweiten Referenzbild (B2, B3, B4) zugeordnet wurden.

7. Verfahren nach einem der vorhergehenden Ansprüche,
wobei die Position des Objekts (4) an einen Flugkörper (28) zum Anfliegen auf das Objekt (4) übergeben wird.

8. Verfahren nach einem der vorhergehenden Ansprüche,
wobei das zweite Referenzbild (B2, B3, B4) und ein weiteres Referenzbild (B1, B2, B3) höherer Zoomstufe mit einem Landschaftsmodell (34) verglichen werden und die Position des Objekts (4) im Landschaftsmodell (34) anhand der Relativpositionen zu Schlüsselpunkten (36) im Landschaftsmodell (34) bestimmt wird, denen Schlüsselpunkte (36) in einem der Referenzbilder (B1, B2, B3, B4) zugeordnet wurden, und die Position zusätzlich anhand der Relativpositionen zu Schlüsselpunkten (36) im Landschaftsmodell (34) überprüft wird, denen Schlüsselpunkten (36) im anderen Referenzbild zugeordnet wurden.

9. Verfahren nach einem der vorhergehenden Ansprüche,
wobei das Objekt (4) mit einer veränderten Ausrichtung der aufnehmenden Kamera (6) in einem nachfolgenden Verifikationsbild (V1, V2, V3, V4) erneut aufgenommen wird, das Verifikationsbild (V1, V2, V3, V4) mit einem der Referenzbilder (B1, B2, B3, B4) verglichen wird, die Position des Objekts (4) anhand der Relativpositionen der im Verifikationsbild (V1, V2, V3, V4) wiedergefundenen Schlüsselpunkte (36) aus dem Referenzbild (B1, B2, B3, B4) bestimmt wird und die Position des Objekts (4) im Verifikationsbild (V1, V2, V3, V4) angezeigt wird.

10. Verfahren nach Anspruch 9,
wobei die Übereinstimmung der Position des Objekts (4) im Verifikationsbild (V1, V2, V3, V4) mit der Position im Referenzbild (B1, B2, B3, B4) überprüft wird.

11. Verfahren nach Anspruch 9 oder 10,
wobei das Objekt (4) in einem zweiten Verifikationsbild (V1, V2, V3), das eine höhere Zoomstufe als das erste Verifikationsbild (V2, V3, V4) aufweist, aufgenommen wird, das zweite Verifikationsbild (V1, V2, V3) mit einem der Referenzbilder (B1, B2, B3, B4) verglichen wird, die Position des Objekts (4) anhand der Relativpositionen der im zweiten Verifikationsbild (V1, V2, V3) wiedergefundenen Schlüsselpunkte (36) aus dem Referenzbild (B1, B2, B3, B4) bestimmt wird und die Position des Objekts (4) im zweiten Verifikationsbild (V1, V2, V3) angezeigt wird.

12. Verfahren nach einem der vorhergehenden Ansprüche,
wobei ein Suchbild einer Umgebung des Objekts (4) aufgenommen wird, Schlüsselpunkte (36) mit charakteristischen Bildmerkmalen im Suchbild ermittelt und mit Schlüsselpunkten (36) eines Referenzbilds (B1, B2, B3, B4) verglichen werden, die Position des Objekts (4) relativ zu den Schlüsselpunkten (36) im Suchbild ermittelt wird und die Position angezeigt wird.

13. Verfahren nach Anspruch 12,
wobei die Position nicht im Suchbild liegt und als Richtung angezeigt wird, in der die Position relativ zur Lage des Suchbilds liegt.

14. Vorrichtung zum Bestimmen einer Position eines Objekts (4) mit
a) einer zoomfähigen Kamera (6) zum Aufnehmen eines ersten und eines zweiten Referenzbilds (B1, B2, B3, B4) des Objekts (4), bei dem die Aufnahme des zweiten Referenzbilds (B2, B3, B4) unmittelbar hinter der Aufnahme des ersten Referenzbilds (B1) erfolgt und das zweite Referenzbild (B2, B3, B4) eine niedrigere Zoomstufe als das erste Referenzbild (B1) aufweist und auf jeden Fall einen Teil der Umgebung um das erste Referenzbild (B1) enthält, der im ersten Referenzbild (B1) nicht enthalten ist, wobei die Kamera (6) weiterhin dazu eingerichtet ist, N ≥ 2 Referenzbilder (B2, B3, B4) mit jeweils niedrigerer Zoomstufe als das jeweils vorhergehende Referenzbild (B1, B2, B3) aufzunehmen,
b) einer Bestimmungseinheit (8) zum Bestimmen einer Position des Objekts (4) im ersten Referenzbild (B1), und
c) einer Bildverarbeitungseinheit (10), die dazu vorbereitet ist, Schlüsselpunkte (36) mit charakteristischen Bildmerkmalen in den beiden Referenzbildern (B1, B2, B3, B4) zu bestimmen, die Relativpositionen der Schlüsselpunkte (36) zum Objekt (4) in beiden Referenzbildern (B1, B2, B3, B4) zu bestimmen, die Schlüsselpunkte (36) in den Referenzbildern (B1, B2, B3, B4) einander zuzuordnen und die Position des Objekts (4) im zweiten Referenzbild (B2, B3, B4) anhand der Relativpositionen der Schlüsselpunkte (36) des zweiten Referenzbilds (B2, B3, B4) zum Objekt (4) zu bestimmen und die Position des Objekts (4) im jeweils nachfolgenden Referenzbild (B2, B3, B4) anhand der Relativpositionen der im nachfolgenden Referenzbild (B2, B3, B4) wiedergefundenen Schlüsselpunkte (36) aus dem jeweils vorhergehenden Referenzbild (B1, B2, B3) zu bestimmen.

## Claims

1. Method for determining a position of an object (4), in which
a) a first reference image (B1) of the object (4) is recorded at a first zoom level of a camera (6) having zoom capability, a position of the object (4) in the reference image (B1) is determined, key points (36) having characteristic image features are ascertained in the reference image (B1), the relative positions of the key points (36) with respect to the object (4) are determined in the reference image (B1),
b) a second reference image (B2, B3, B4), which overlaps the first reference image (B1), is recorded at a lower second zoom level, key points (36) having characteristic image features are ascertained in the second reference image (B2, B3, B4), the key points (36) in the reference images (B1, B2, B3, B4) are associated with one another, and the position of the object (4) in the second reference image (B2, B3, B4) is determined on the basis of the relative positions of the key points (36) of the second reference image (B2, B3, B4) with respect to the object (4),
wherein
c) the recording of the second reference image (B2, B3, B4) is performed with the same camera (6) immediately after the recording of the first reference image (B1) and the second reference image (B2, B3, B4) at any rate contains a part of the area surrounding the first reference image (B1) that is not contained in the first reference image (B1),
d) N ≥ 2 reference images (B2, B3, B4) are recorded at in each case a lower zoom level than the respectively preceding reference image (B1, B2, B3), and the position of the object (4) in the respectively following reference image (B2, B3, B4) is determined on the basis of the relative positions of the key points (36), which were found again in the following reference image (B2, B3, B4), from the respectively preceding reference image (B1, B2, B3) .

2. Method according to Claim 1,
wherein the second reference image (B2, B3, B5) is recorded without moving the camera away from the recording region of the first reference image (B1).

3. Method according to Claim 1 or 2,
wherein the image section of the first reference image (B1) is contained completely within the image section of the second reference image (B2, B3, B4).

4. Method according to one of the preceding claims,
Wherein the second reference image (B4) is a reference image (B4) of a series of reference images (B1, B2, B3, B4) and has the lowest zoom level in this series.

5. Method according to one of the preceding claims,
wherein the zoom levels, in terms of their aspect ratio, correspond to the octaves when generating the key points (36) .

6. Method according to one of the preceding claims,
wherein the second reference image (B2, B3, B4) is compared with a terrain model (34), and the position of the object (4) in the terrain model (34) is determined on the basis of the relative positions with respect to key points (36) in the terrain model (34) with which key points (36) in the second reference image (B2, B3, B4) were associated.

7. Method according to one of the preceding claims,
wherein the position of the object (4) is transmitted to a missile (28) for flying toward the object (4).

8. Method according to one of the preceding claims,
wherein the second reference image (B2, B3, B4) and a further reference image (B1, B2, B3) of a higher zoom level are compared with a terrain model (34) and the position of the object (4) in the terrain model (34) is determined on the basis of the relative positions with respect to key points (36) in the terrain model (34) with which key points (36) in one of the reference images (B1, B2, B3, B4) were associated, and the position is additionally checked on the basis of the relative positions with respect to key points (36) in the terrain model (34) with which key points (36) in the other reference image were associated.

9. Method according to one of the preceding claims,
wherein the object (4) is recorded again with a changed alignment of the recording camera (6) in a subsequent verification image (V1, V2, V3, V4), the verification image (V1, V2, V3, V4) is compared with one of the reference images (B1, B2, B3, B4), the position of the object (4) is determined on the basis of the relative positions of the key points (36), which were found again in the verification image (V1, V2, V3, V4), from the reference image (B1, B2, B3, B4), and the position of the object (4) is indicated in the verification image (V1, V2, V3, V4).

10. Method according to Claim 9,
wherein the match of the position of the object (4) in the verification image (V1, V2, V3, V4) to the position in the reference image (B1, B2, B3, B4) is checked.

11. Method according to Claim 9 or 10,
wherein the object (4) is recorded in a second verification image (V1, V2, V3) which has a higher zoom level than the first verification image (V2, V3, V4), the second verification image (V1, V2, V3) is compared with one of the reference images (B1, B2, B3, B4), the position of the object (4) is determined on the basis of the relative positions of the key points (36), which were found again in the second verification image (V1, V2, V3), from the reference image (B1, B2, B3, B4), and the position of the object (4) is indicated in the second verification image (V1, V2, V3).

12. Method according to one of the preceding claims,
wherein a search image of a surrounding area of the object (4) is recorded, key points (36) having characteristic image features are ascertained in the search image and compared with key points (36) of a reference image (B1, B2, B3, B4), the position of the object (4) relative to the key points (36) is ascertained in the search image, and the position is indicated.

13. Method according to Claim 12,
wherein the position is not located within the search image and is indicated as the direction in which the position is relative to the location of the search image.

14. Apparatus for determining a position of an object (4) having
a) a camera (6) having zoom capability for recording a first and a second reference image (B1, B2, B3, B4) of the object (4), in which the recording of the second reference image (B2, B3, B4) is performed immediately after the recording of the first reference image (B1), and the second reference image (B2, B3, B4) has a lower zoom level than the first reference image (B1) and at any rate contains a part of the area surrounding the first reference image (B1) that is not contained in the first reference image (B1), wherein the camera (6) is furthermore configured to record N ≥ 2 reference images (B2, B3, B4) at in each case a lower zoom level than the respectively preceding reference image (B1, B2, B3),
b) a determination unit (9) for determing a position of the object (4) in the first reference image (B1), and
c) an image processing unit (10) that is prepared to determine key points (36) having characteristic image features in the two reference images (B1, B2, B3, B4), to determine the relative positions of the key points (36) with respect to the object (4) in the two reference images (B1, B2, B3, B4), to associate the key points (36) in the reference images (B1, B2, B3, B4) with one another, and to determine the position of the object (4) in the second reference image (B2, B3, B4) on the basis of the relative positions of the key points (36) of the second reference image (B2, B3, B4) with respect to the object (4) and to determine the position of the object (4) in the respectively following reference image (B2, B3, B4) on the basis of the relative positions of the key points (36), which were found again in the following reference image (B2, B3, B4), from the respectively preceding reference image (B1, B2, B3).

## Revendications

1. Procédé de détermination d'une position d'un objet (4), dans lequel
a) une première image de référence (B1) de l'objet (4) est acquise avec un premier niveau de zoom d'une caméra à focale variable (6), une position de l'objet (4) dans l'image de référence (B1) est déterminée, des points clés (36) présentant des éléments d'image caractéristiques sont déterminés dans l'image de référence (B1), les positions relatives des points clés (36) par rapport à l'objet (4) sont déterminées dans l'image de référence (B1),
b) une deuxième image de référence (B2, B3, B4) chevauchant la première image de référence (B1) est acquise avec un deuxième niveau de zoom plus faible, des points clés (36) présentant des éléments d'image caractéristiques sont déterminés dans la deuxième image de référence (B2, B3, B4), les points clés (36) dans les images de référence (B1, B2, B3, B4) sont associés les uns aux autres et la position de l'objet (4) dans la deuxième image de référence (B2, B3, B4) est déterminée sur la base des positions relatives des points clés (36) de la deuxième image de référence (B2, B3, B4) par rapport à l'objet (4),
dans lequel
c) l'acquisition de la deuxième image de référence (B2, B3, B4) au moyen de la même caméra (6) est effectuée immédiatement après l'acquisition de la première image de référence (B1) et la deuxième image de référence (B2, B3, B4) contient dans tous les cas une partie de l'environnement proche de la première image de référence (B1) qui n'est pas contenue dans la première image de référence (B1),
d) N ≥ 2 images de référence (B2, B3, B4) sont acquises avec un niveau de zoom respectif plus faible que celui de l'image de référence précédente (B1, B2, B3) respective et la position de l'objet (4) dans l'image de référence suivante (B2, B3, B4) respective est déterminée à partir de l'image de référence précédente (B1, B2, B3) respective sur la base des positions relatives des points clés (36) retrouvés dans l'image de référence suivante (B2, B3, B4).

2. Procédé selon la revendication 1,
dans lequel l'acquisition de la deuxième image de référence (B2, B3, B4) est effectuée sans mouvement panoramique de la caméra par rapport à la zone d'acquisition de la première image de référence (B1).

3. Procédé selon la revendication 1 ou 2,
dans lequel la partie d'image de la première image de référence (B1) est entièrement contenue dans la partie d'image de la deuxième image de référence (B2, B3, B4).

4. Procédé selon l'une des revendications précédentes,
dans lequel la deuxième image de référence (B4) est une image de référence (B4) provenant d'une série d'images de référence (B1, B2, B3, B4) et présente le niveau de zoom le plus faible dans ladite série.

5. Procédé selon l'une des revendications précédentes,
dans lequel les niveaux de zoom présentent un rapport d'image correspondant aux octaves lors de la création des points clés (36).

6. Procédé selon l'une des revendications précédentes,
dans lequel la deuxième image de référence (B2, B3, B4) est comparée à un modèle de paysage (34) et la position de l'objet (4) dans le modèle de paysage (34) est déterminée sur la base des positions relatives par rapport à des points clés (36) dans le modèle de paysage (34) auxquels des points clés (36) ont été associés dans la deuxième image de référence (B2, B3, B4).

7. Procédé selon l'une des revendications précédentes,
dans lequel la position de l'objet (4) est transmise à un missile (28) pour un vol dirigé vers l'objet (4).

8. Procédé selon l'une des revendications précédentes,
dans lequel la deuxième image de référence (B2, B3, B4) et une autre image de référence (B1, B2, B3) présentant un niveau de zoom plus élevé sont comparées à un modèle de paysage (34) et la position de l'objet (4) dans le modèle de paysage (34) est déterminée sur la base des positions relatives par rapport à des points clés (36) dans le modèle de paysage (34) auxquels des points clés (36) ont été associés dans l'une des images de référence (B1, B2, B3, B4), et la position est en outre vérifiée sur la base des positions relatives par rapport à des points clés (36) dans le modèle de paysage (34) auxquels des points clés (36) ont été associés dans l'autre image de référence.

9. Procédé selon l'une des revendications précédentes,
dans lequel l'objet (4) est de nouveau acquis avec une orientation modifiée de la caméra d'acquisition (6) dans une image de vérification (V1, V2, V3, V4) suivante, l'image de vérification (V1, V2, V3, V4) est comparée à l'une des images de référence (B1, B2, B3, B4), la position de l'objet (4) est déterminée à partir de l'image de référence (B1, B2, B3, B4) sur la base des positions relatives des points clés (36) retrouvés dans l'image de vérification (V1, V2, V3, V4) et la position de l'objet (4) est indiquée dans l'image de vérification (V1, V2, V3, V4).

10. Procédé selon la revendication 9,
dans lequel la concordance entre la position de l'objet (4) dans l'image de vérification (V1, V2, V3, V4) et la position dans l'image de référence (B1, B2, B3, B4) est vérifiée.

11. Procédé selon la revendication 9 ou 10,
dans lequel l'objet (4) est acquis dans une deuxième image de vérification (V1, V2, V3) qui présente un niveau de zoom plus élevé que celui de la première image de vérification (V2, V3, V4), la deuxième image de vérification (V1, V2, V3) est comparée à l'une des images de référence (B1, B2, B3, B4), la position de l'objet (4) est déterminée à partir de l'image de référence (B1, B2, B3, B4) sur la base des positions relatives des points clés (36) retrouvés dans la deuxième image de vérification (V1, V2, V3) et la position de l'objet (4) est indiquée dans la deuxième image de vérification (V1, V2, V3).

12. Procédé selon l'une des revendications précédentes,
dans lequel une image de recherche d'un environnement de l'objet (4) est acquise, des points clés (36) présentant des éléments d'image caractéristiques dans l'image de recherche sont déterminés et comparés à des points clés (36) d'une image de référence (B1, B2, B3, B4), la position de l'objet (4) par rapport aux points clés (36) dans l'image de recherche est déterminée et la position est indiquée.

13. Procédé selon la revendication 12,
dans lequel la position ne se situe pas dans l'image de recherche et est indiquée sous la forme d'une direction dans laquelle la position se situe par rapport à la position de l'image de recherche.

14. Dispositif de détermination d'une position d'un objet (4), comprenant
a) une caméra à focale variable (6) destinée à acquérir une première et une deuxième image de référence (B1, B2, B3, B4) de l'objet (4), dans lequel l'acquisition de la deuxième image de référence (B2, B3, B4) est effectuée immédiatement après l'acquisition de la première image de référence (B1) et la deuxième image de référence (B2, B3, B4) présente un niveau de zoom plus faible que celui de la première image de référence (B1) et contient dans tous les cas une partie de l'environnement proche de la première image de référence (B1) qui n'est pas contenue dans la première image de référence (B1), dans lequel la caméra (6) est en outre conçue pour acquérir N ≥ 2 images de référence (B2, B3, B4) présentant respectivement un niveau de zoom plus faible que celui de l'image de référence précédente (B1, B2, B3) respective,
b) une unité de détermination (8) destinée à déterminer une position de l'objet (4) dans la première image de référence (B1), et
c) une unité de traitement d'images (10) qui est préparée pour déterminer des points clés (36) présentant des éléments d'image caractéristiques dans les deux images de référence (B1, B2, B3, B4), pour déterminer les positions relatives des points clés (36) par rapport à l'objet (4) dans les deux images de référence (B1, B2, B3, B4), pour associer les uns aux autres les points clés (36) dans les images de référence (B1, B2, B3, B4) et pour déterminer la position de l'objet (4) dans la deuxième image de référence (B2, B3, B4) sur la base des positions relatives des points clés (36) de la deuxième image de référence (B2, B3, B4) par rapport à l'objet (4) et pour déterminer à partir de l'image de référence précédente (B1, B2, B3) respective la position de l'objet (4) dans l'image de référence suivante (B2, B3, B4) respective sur la base des positions relatives des points clés (36) retrouvés dans l'image de référence suivante (B2, B3, B4).
